# EUROPÄISCHE PATENTSCHRIFT

(11) **EP 0 752 342 B1**
(45) Veröffentlichungstag und Bekanntmachung des Hinweises auf die Patenterteilung: **17.05.2000**
(21) Anmeldenummer: 96110349.6
(22) Anmeldetag: 27.06.1996
(51) Int. Cl.: B60P 7/08

(54) **Ladungssicherungsvorrichtung**
Device for securing load
Dispositif de maintien de chargement

(30) Priorität: 03.07.1995 DE 29511241 U
(43) Veröffentlichungstag der Anmeldung: 08.01.1997
(73) Patentinhaber: SPANSET INTER AG, CH-8618 Oetwil am See (CH)
(72) Erfinder: Dänekas, Rolf, 52525 Waldfeucht (DE); Kämper, Hans-Werner, 52146 Würselen (DE)
(74) Vertreter: Tergau, Enno, Dipl.-Ing.

(56) Entgegenhaltungen:
- DE-U- 7 916 385
- US-A- 3 199 709
- US-A- 3 378 889
- US-A- 3 637 234
- US-A- 4 526 500
- US-A- 5 226 764

## Beschreibung

Die vorliegende Erfindung betrifft eine Ladungssicherungsvorrichtung mit mindestens einem als Zurrgurt ausgebildeten, vorspannbaren Zurrstrang. Die Vorrichtung dient insbesondere zur Sicherung von schweren und massiven Ladegütern, beispielsweise Bauplatten, Blechpaketen oder Blechcoils. Derartig schwere und massive Ladegüter weisen ein hohes Eigengewicht auf. Wegen des hohen Eigengewichts kann nur ein relativ niedriges Volumen von diesen Ladegütern auf der Ladefläche eines Transportfahrzeugs, beispielsweise eines LKW oder Eisenbahnwaggons, transportiert werden. Infolge des geringen Volumens weisen diese Ladegüter auf der Ladefläche auch nur eine geringe Höhe auf.

Es ist bekannt, Ladegüter auf Ladeflächen mit Hilfe des sogenannten "Niederzurrens" gegen ein Verrutschen auf der Ladefläche zu sichern Die Ladungssicherung erfolgt beim Niederzurren durch die Beaufschlagung des Ladeguts mit einer vertikalen, im wesentlichen senkrecht zur Ladefläche verlaufenden Kraft. Der Zurrgurt ist hierbei von einem Ende der Ladefläche zu ihrem anderen Ende geführt und überspannt so die Ladefläche. In Vertikalrichtung zwischen Ladefläche und Zurrgurt ist das Ladegut eingebracht. Der Zurrgurt ist mit Hilfe eines Spannmittels, beispielsweise einer Spannratsche oder Spannwinde vorspannbar. Infolge der Vorspannung drückt eine Flachseite des Zurrgurtes auf das Ladegut und leitet auf diese Weise eine vertikale Niederzurrkraft in das Ladegut ein.

Beim Niederzurren der oben erwähnten schweren, massiven, jedoch niedrig bauenden Ladegütern ist der Abstand zwischen der Ladefläche und der flachen, am Ladegut anliegenden Gurtfläche sehr klein. Der Zurrgurt nähert sich im gespannten Zustand somit asymptotisch an die Ladefläche an, wodurch die in Vertikalrichtung wirksame Niederzurrkraft überproportional sinkt. Die in Vertikalrichtung wirksame Niederzurrkraft reicht dann nicht mehr zur Ladungssicherung, also zur Aufnahme der im wesentlichen in Horizontalrichtung auf das Ladegut einwirkenden Beschleunigungs- bzw. Verzögerungskräfte aus.

Eine betriebssichere Sicherung von schweren und gleichzeitig flach bauenden Ladegütern könnte mit Hilfe des Niederzurrens nur dadurch erreicht werden, daß eine Vielzahl von Zurrgurten das Ladegut beaufschlagt. Wegen des begrenzten Volumens ist die Anzahl der Zurrgurte jedoch limitiert. Außerdem ist die Anbringung mehrerer Zurrgurte sehr zeitaufwendig, so daß in der Regel kein Transporteur bereit ist, diesen zusätzlichen zeitlichen Aufwand in Kauf zu nehmen. Als weitere Problemlösung wäre es denkbar, Ladungssicherungelemente, beispielsweise Keile und Bohlen auf der Ladefläche zu montieren. Derartige formschlüssige Ladungssicherungselemente wären geeignet, einen Teil der in Horizontalrichtung wirksamen, beim Beschleunigen und Verzögern auftretenden Kräfte aufzunehmen. Allerdings müßten auf den Ladeflächen entsprechende Montagehilfsmittel vorgesehen sein, was die Ladungssicherung entscheidend verteuern würde. Außerdem wäre der Zeitaufwand für die Anbringung der Ladungssicherung gegenüber einer üblichen Niederzurrung so groß, daß seitens der Transporteure wiederum keine Neigung besteht, diesen höheren Zeit- und Montageaufwand zu investieren.

Sämtliche vorerwähnten Probleme werden noch dadurch gesteigert, daß an den vorerwähnten Ladegütern in der Regel keine festen Zurrpunkte, wie beispielsweise Anschlagteile vorgesehen sind, was die Anbringung einer Verzurrung generell erschwert.

Aus der US-A-3,637,234 ist in diesem Zusammenhang bekannt, an die dort als Stahlrollen offenbarte Ladung winkelförmige Führungen anzuschlagen, um die als Ketten ausgebildeten Zurrelemente an der Ladung zu führen.

Aus der US-A-3,378,889 ist weiterhin ein Führungselement für eine Verseilung bekannt, welche Nuten und Führungsrollen aufweist. Dieses Führungselement ist in seinem Aufbau jedoch sehr kompliziert.

Aus der gattungsbildenden US-A-5,226,764 ist schließlich ein Führungselement sowohl für Zurrketten als auch für flache Zurrgurte bekannt. Dieses Führungselement ist winkelförmig ausgestaltet und mit mehreren Führungsrollen und einer Rückhaltevorrichtung versehen, also wiederum sehr kompliziert aufgebaut.

Ausgehend von den vorstehend geschilderten Nachteilen und den aus dem Stand der Technik vorbekannten Konstruktionen liegt der Erfindung die Aufgabe zugrunde, eine Ladungssicherungsvorrichtung so zu gestalten, daß das Ladegut mit einfachen Mitteln mit Hilfe eines Zurrgurts auf einer Ladefläche verzurrt werden kann bei ordnungsmäßiger Erfüllung sämtlicher Anforderungen an eine Ladungssicherung auf Transportfahrzeugen.

Diese Aufgabe ist durch die Merkmalskombination des Anspruches 1 gelöst. Der prinzipielle Lösungsgedanke besteht in der Anbringung einer kombinierten Rückhalte- und Schrägverzurrung am Ladegut. Diese kombinierte Rückhalte- und Schrägverzurrung beaufschlagt das Ladegut mit im wesentlichen schräg zur Ladefläche verlaufenden Kraftkomponenten, welche ausreichen, die im wesentlichen in Horizontalrichtung verlaufenden, auf das Ladegut wirkenden Beschleunigungs- und Verzögerungskräfte zu kompensieren und so eine solide Lagesicherung des Ladeguts auf der Ladefläche zu gewährleisten. Um eine Knickung des Zurrstranges zu verhindern und um eine gleichbleibend gute Befestigung des Zurrstranges am Ladegut zu erreichen, ist eine als Führung für den Zurrstrang wirksame Gurtanlagefläche am Ladegut vorgesehen und konkav ausgebildet. Im gurtbandführenden Bereich liegt der Zurrgurt mit seiner gesamten Gurtflachseite an dieser konkaven Gurtanlagefläche vollständig an, so daß eine besonders gute Aufstützung des Zurrgurtes auf der Gurtanlagefläche gewährleistet ist. Zudem ist eine unerwünschte Knickung des Zurrgurtes wirksam verhindert. Vielmehr ist der Zurrgut in einem vordefinierten und erwünschten Radius um die Gurtanlagefläche und damit um das Ladegut gelegt, wodurch eine besonders materialschonende Umlenkung des Zurrgurtes gewährleistet und realisiert ist. Dies ermöglicht zudem unterschiedliche Schräglagen des Spannmittels am Fahrzeug. Auf diese Weise ist es möglich, verschiedene Zurrpunkte am Fahrzeug für die verschiedensten Positionen des Ladeguts auf der Ladefläche gleichermaßen zu verwenden. Die Erfindung gewährleistet somit ein hohes Maß an Flexibilität und eine Vielzahl von Einsatzmöglichkeiten insbesondere des vom Ladegut separaten Umlenk- und Stützelements.

Diese Führung kann sowohl mit dem Ladegut fest verbunden sein (Anspruch 2) als auch als separates Adaptionsteil ausgestaltet sein. Besonders gut geeignet ist hierfür ein kombiniertes Umlenk- und Stützelement nach den Ansprüchen 3 und 4. Dieses kombinierte Umlenk- und Stützelement weist eine an den jeweiligen Zurrstrang angepaßte Gurtanlagefläche und eine der Geometrie des Ladeguts angepaßte Ladegutanlagefläche auf. Wenn im Zusammenhang mit der Erfindung von "Zurrstrang" die Rede ist, kann es sich hierbei um Gurte aus allen denkbaren Materialien wie beispielsweise Stahl, Kunststoff, Textil oder Hanf handeln.

Die Anbringung des Zurrstranges unterhalb der Oberseite des Ladeguts nach Anspruch 5 gewährleistet einen hohen Anteil in Horizontalrichtung wirksamer Kraftkomponenten der Zurrkraft, welche zur Neutralisierung der ebenfalls im wesentlichen in Horizontalrichtung verlaufenden Beschleunigungs- und Verzögerungskräfte besonders gut geeignet sind. Die teilweise die Oberseite des Ladeguts überragende Anbringung des Zurrstranges nach Anspruch 6 hat dagegen einerseits den Vorteil, daß ein Aufkippen des gesicherten Ladeguts wirksam verhindert ist und gewährleistet andererseits eine besonders gute statistische Verteilung der Kraftkomponenten über die Führung bzw. das kombinierte Umlenk- und Stützelement. Die Ausführungsform gemäß Anspruch 7 mit einem ausschließlich oberhalb der Oberseite des Ladeguts angeordneten Zurrstrang ist für Anwendungsfälle gedacht, bei denen die Sicherheit des Ladeguts gegen ein Aufkippen im Vordergrund steht.

Die Ansprüche 8 und 9 lehren fertigungstechnisch vorteilhafte Kombinationen von Materialien und Fertigungsverfahren für das Umlenk- und Stützelement, welche eine Serienfertigung des Umlenk- und Stützelements als Fertigteil begünstigen.

Anspruch 10 betrifft eine weitere Fertigungsmöglichkeit für das Umlenk- und Stützelement, welche sich insbesondere für die handwerkliche Anfertigung individuell, auch an Spezialkonstellationen angepaßter Umlenk- und Stützelemente eignet.

Der Verfahrensanspruch 11 betrifft die Verwendung eines speziellen Winkels aus Kunststoff oder Metall als Umlenk- und Stützelement. Für diese Ausführungsform des Umlenk- und Stützelements wird separat Elementenschutz beansprucht, weil es sich hierbei um eine selbständig erfinderische Merkmalskombination handelt.

Anhand der in den Zeichnungsfiguren dargestellten Ausführungsbeispielen ist die Erfindung mit weiteren wesentlichen Merkmalen näher erläutert. Es zeigen:
- Fig. 1: die erfindungsmäßige, kombinierte Rückhalte- und Schrägverzurrung
- Fig. 2: die Darstellung eines Lastkraftwagens mit einer Ladungssicherungsvorrichtung nach dem Stand der Technik
- Fig. 3: den Schnitt III-III gemäß Fig. 2
- Fig. 4: eine perspektivische Teil-Seitenansicht des auf der Ladefläche mittels der erfindungsmäßigen Ladungssicherungvorrichtung gesicherten Ladeguts
- Fig. 5: die Draufsicht auf das auf der Ladefläche fixierte Ladegut gemäß Pfeil V in Fig. 4
- Fig. 6: eine perspektivische Darstellung eines kombinierten Umlenk- und Stützelements
- Fig. 7: die geschnittene Seitenansicht eines kombinierten Umlenk- und Stützelements mit an der Gurtanlagefläche anliegendem Zurrgurt
- Fig. 8: die geschnittene Seitenansicht einer weiteren Ausführungsform des kombinierten Umlenk- und Stützelements sowie
- Fig. 9: die geschnittene Seitenansicht einer weiteren Ausführungsform des kombinierten Umlenk- und Stützelements.

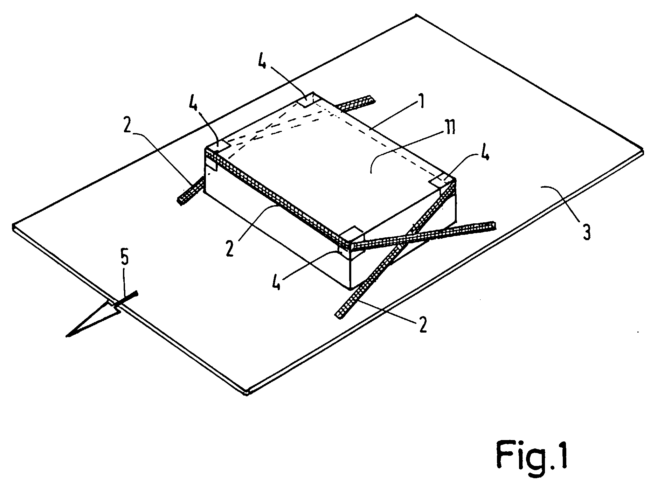

Das in Fig. 1 dargestellte rechteckförmige Ladegut 1 ist mittels zweier, in Fig. 1 schematisch angedeuteter Zurrgurte 2 auf der Ladefläche 3 verzurrt. An den vier Kanten des Ladeguts 1 ist jeweils ein kombiniertes, als Führung für den jeweils zugeordneten Zurrgurt 2 wirksames Umlenk- und Stützelement 4 angebracht. Die in Fig. 1 dargestellte kombinierte Rückhalte- und Schrägverzurrung verhindert ein Verrutschen des Ladeguts 1 auf der Ladefläche 3 in bzw. entgegen der Fahrtrichtung 5.

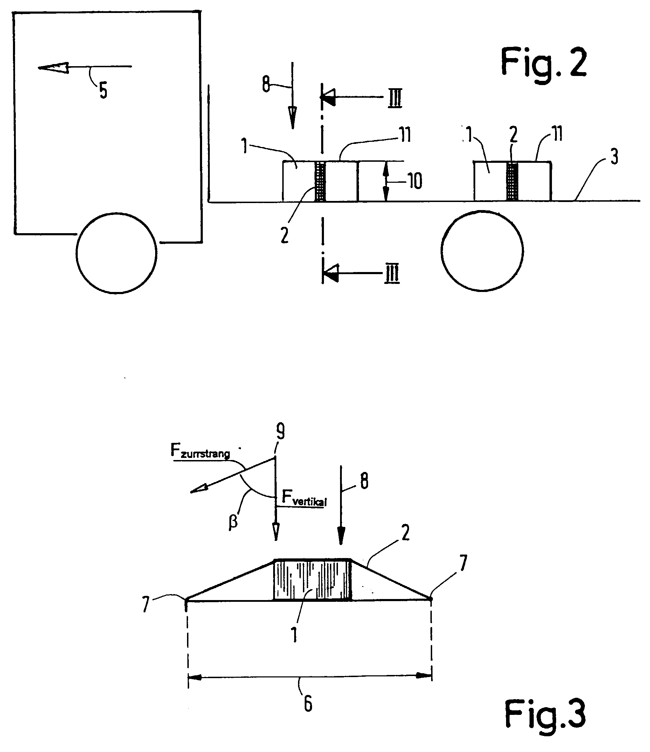

Bei der Ladungssicherung mit Niederzurren (Fig. 2, Fig. 3) ist der Zurrgurt 2 an der Ladefläche 3 derart angebracht, daß er die Ladefläche 3 ihrer Ladeflächenbreite 6 nach überspannt. Der Zurrgurt 2 wird mittels an den Zurrpunkten 7 vorgesehenen, in den Zeichnungen nicht dargestellten Spannvorrichtungen derart vorgespannt, daß seine wirksame, die Ladeflächenbreite 6 überspannende Länge gekürzt wird, so daß der Gurt in. Vertikalrichtung 8 das Ladegut 1 mit einer als Niederzurrkraft wirksamen Kraftkomponente F_{Vertikal} beaufschlagt. Das Kräftedreieck 9 in Fig. 3 zeigt die durch die Vorspannung des Zurrgurtes direkt erzeugte Kraft F_{Zurrstrang} sowie die in Vertikalrichtung 8 wirksame Kraftkomponente F_{Vertikal}. Die Kraftkomponente F_{Vertikal} entspricht der als Niederzurrkraft wirksamen Komponente beim Niederzurren. Die beiden Kraftkomponenten F_{zurrstrang} und F_{Vertikal} bilden sich zwischen sich den Spannwinkel β, wobei sich die vertikale Kraftkomponente Fᵥₑᵣₜᵢₖₐₗ zum Spannwinkel β proportional verhält. Mit anderen Worten bedeutet dies, daß die vertikale Kraftkomponente Fᵥₑᵣₜᵢₖₐₗ mit sinkendem Vertikalabstand 10 zwischen der Ladefläche 3 und der Oberseite 11 des Ladeguts 1 absinkt. Dieses Absinken der vertikalen Kraftkomponenten Fᵥₑᵣₜᵢₖₐₗ mit sinkender Ladeguthöhe (= Vertikalabstand 10) ist auch ursächlich für das Nichtfunktionieren des Niederzurrens bei niedrigen Ladegütern 1 mit hohem Eigengewicht.

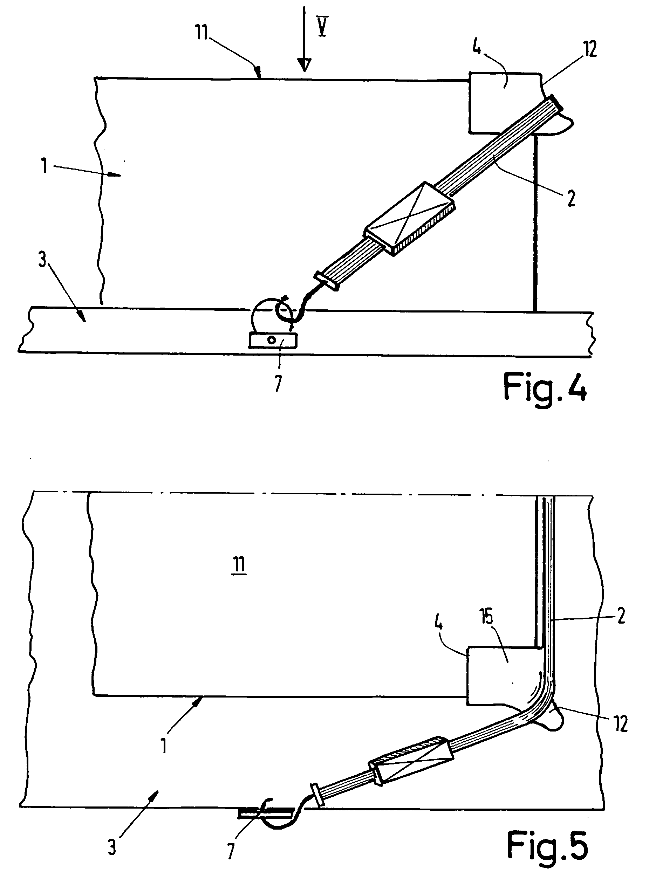

Das Umlenk- und Stützelement 4 bei der Rückhalte- und Schrägverzurrung gemäß Fig. 1 weist eine konkave Gurtanlagefläche 12 auf der dem Ladegut 1 abgewandten Seite auf. Die dem Ladegut zugewandte Ladegutanlagefläche 13 ist in ihrer Geometrie der ihr zugeordneten Kante des Ladeguts 1 angepaßt. Die Fig. 4 bis 9 zeigen sämtlich Ausführungsformen von Umlenk- und Stützelementen 4 für rechteckförmige Ladegüter 1. Diese Umlenk- und Stützelemente 4 werden jeweils auf die vier Kanten auf der Ladegutoberseite 11 aufgeschoben. Das Umlenk- und Stützelment 4 besteht hierbei aus zwei einen Winkel bildenden Winkelschenkeln 14 und einer die Winkelschenkel 14 an einer Seite überspannenden Deckfläche 15. Insbesondere aus der Darstellung der Fig. 5 ist besonders gut die Anschmiegung des Zurrgurtes 2 an die Gurtanlagefläche 12 erkennbar. Der Zurrgurt 2 erfährt an der Gurtanlagefläche 12 eine knickfreie Umlenkung und ist durch die Konkavität der Gurtanlagefläche 12 formschlüssig geführt.

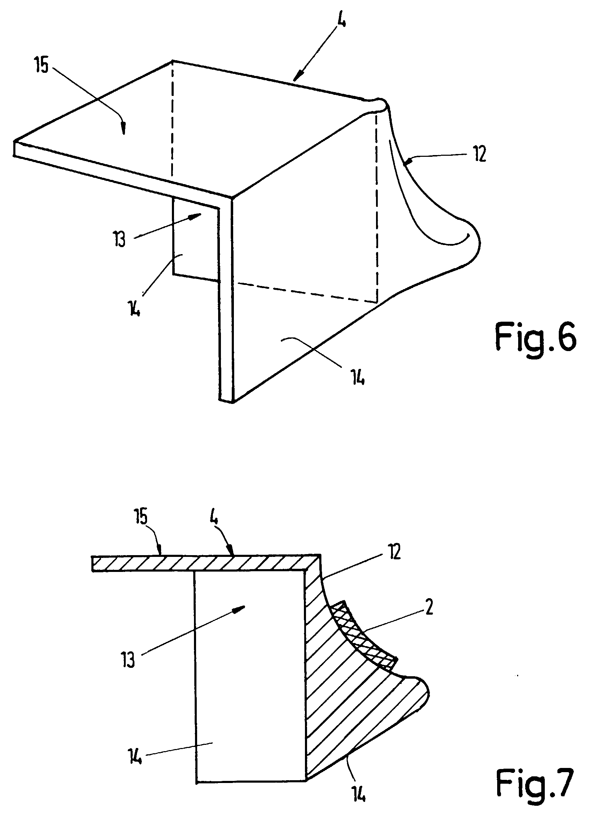

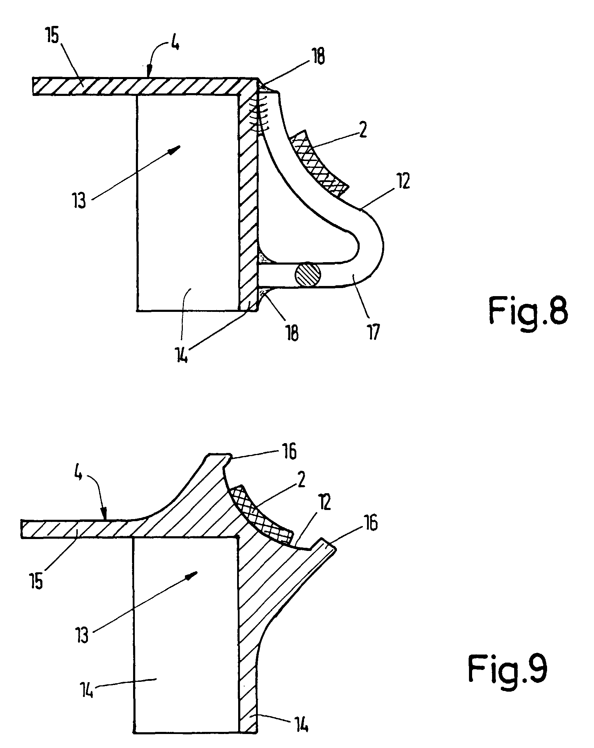

Fig. 7 und Fig. 9 zeigen jeweils als Gußteile ausgestaltete Ausführungsformen des Umlenk- und Stützelements 4, wobei der Zurrgurt 2 im Ausführungsbeispiel gemäß Fig. 7 unterhalb der Deckfläche 15 und somit auch unterhalb der Ladegutoberseite 11 verläuft, während Fig. 9 einen Verlauf des Zurrgurtes 2 teilweise oberhalb und teilweise unterhalb der Deckfläche 15 und somit der Ladegutoberseite 11 zeigt. Bei dem Ausführungsbeispiel gemäß Fig. 9 sind an den Rändern der Gurtanlagefläche 12 zwei aus der Gurtanlagefläche 12 hinausstehende Fixiervorsprünge 16 zur zusätzlichen formschlüssigen Sicherung des Zurrgurtes 2 in der Gurtanlagefläche 12 angeformt. Bei dem Ausführungsbeispiel gemäß Fig. 9 könnte deshalb auch gewissermaßen von einer als Gurtführung wirksamen Gurtanlagewanne gesprochen werden.

Das in Fig. 8 dargestellte Ausführungsbeispiel zeigt wiederum ein aus einem Winkel mit die Winkelschenkel 14 überlappender Deckfläche gebildetes Umlenk- und Stützelement 4. Die Gurtanlagefläche 12 ist hierbei aus einem Drahtprofil 17 gebogen. Das gebogene Drahtprofil 17 ist mit dem aus den Winkelschenkeln 14 und Deckfläche 15 verbundenen Grundkörper des Umlenk- und Stützelements mittels der Schweißnähte 18 stoffschlüssig verbunden.

### Bezugszeichenliste

- 1: Ladegut
- 2: Zurrgurt
- 3: Ladefläche
- 4: Umlenk- und Stützelement
- 5: Fahrtrichtung
- 6: Ladeflächenbreite
- 7: Zurrpunkt
- 8: Vertikalrichtung
- 9: Kräftedreieck
- 10: Vertikalabstand
- 11: Ladegutoberseite
- 12: Gurtanlagefläche
- 13: Ladegutanlagefläche
- 14: Winkelschenkel
- 15: Deckfläche
- 16: Fixiervorsprung
- 17: Drahtprofil
- 18: Schweißnaht

- F_{zurrstrang}: Kraftkomponente in Richtung des Zurrstranges
- Fᵥₑᵣₜᵢₖₐₗ: Kraftkomponente in Vertikalrichtung
- β: Spannwinkel

## Patentansprüche

1. Ladungssicherungsvorrichtung mit mindestens einem als Zurrgurt (2) ausgebildeten, vorspannbaren Zurrstrang mit einer Führung am Ladegut (1), welche eine Gurtanlagefläche (12) bildet, an welcher Gurtanlagefläche (12) in gezurrtem Zustand der Zurrgurt (2) anliegt und das Ladegut (1) mittels einer kombinierten Rückhalte- und Schrägverzurrung sichert,
dadurch gekennzeichnet,
daß die Gurtanlagefläche (12) konkav ausgebildet ist zur formschlußartigen Führung und Abstützung des Zurrgurts (2) bei gleichzeitiger Verhinderung einer Knickung des Gurtbandes.

2. Vorrichtung nach Anspruch 1
gekennzeichnet durch
eine mit dem Ladegut (1) fest verbundene Führung.

3. Vorrichtung nach Anspruch 1
gekennzeichnet durch
ein am Ladegut (1) adaptierbares, kombiniertes Umlenk- und Stützelement (4) als Führung.

4. Vorrichtung nach Anspruch 3
dadurch gekennzeichnet,
daß am Umlenk- und Stützelement (4)
- auf der dem Ladegut (1) abgewandten Seite die Gurtanlagefläche (12) ausgebildet ist und
- auf der dem Ladegut (1) zugewandten Seite eine an die Geometrie des Ladeguts (1) angepaßte Ladegutanlagefläche (13) ausgebildet ist.

5. Vorrichtung nach einem der Ansprüche 1 bis 4
dadurch gekennzeichnet,
daß der Zurrstrang im gezurrten Zustand ausschließlich unterhalb der Ladegutoberseite (11) verläuft.

6. Vorrichtung nach einem der Ansprüche 1 bis 4
dadurch gekennzeichnet,
daß der Zurrstrang im gezurrten Zustand teilweise über die Ladegutoberseite (11) hinaussteht.

7. Vorrichtung nach einem der Anspruch 1 bis 4
dadurch gekennzeichnet,
daß der Zurrstrang im gezurrten Zustand ausschließlich oberhalb der Ladegutoberseite (11) verläuft.

8. Vorrichtung nach einem der Ansprüche 3 bis 7
dadurch gekennzeichnet,
daß das Umlenk- und Stützelement (4) aus Kunststoff besteht, insbesondere gespritzt oder formgegossen ist.

9. Vorrichtung nach einem der Ansprüche 3 bis 7
dadurch gekennzeichnet,
daß das Umlenk- und Stützelement (4) aus Metall besteht und vorzugsweise als Gußteil, insbesondere Spritzgußteil gefertigt ist.

10. Vorrichtung nach einem der Ansprüche 3 bis 7
dadurch gekennzeichnet,
daß das Umlenk- und Stützelement (4) aus Blechen und Drahtprofilen (17) zusammengesetzt, vorzugsweise zusammengeschweißt ist.

11. Verwendung eines an seiner Scheitelkante eine konkave Führungsfläche tragenden Metall- oder Kunststoffwinkels mit vorzugsweise einer die beiden Winkelschenkel (14) an einer Seite verbindend überspannenden Deckfläche (15) als Umlenk- und Stützelement (4) einer Ladungssicherungsvorrichtung gemäß Anspruch 1.

## Claims

1. Load-securing device having at least one pretensionable lashing strand which is formed as a lashing strap (2) and has a guide on the loading article (1), which guide forms a strap-bearing surface (12), against which strap-bearing surface (12), in the lashed state, the lashing strap (2) bears and secures the loading article (1) by means of a combined retaining and oblique lashing, characterized in that the strap-bearing surface (12) is concavely shaped for the purpose of form-fitting-type guidance and support of the lashing strap (2) while simultaneously preventing kinking of the strap webbing.

2. Device according to Claim 1, characterized by a guide which is fixedly connected to the loading article (1).

3. Device according to Claim 1, characterized by a combined deflecting and supporting element (4), adaptable to the loading article (1), as the guide.

4. Device according to Claim 3, characterized in that, on the deflecting and supporting element (4),
- the strap-bearing surface (12) is formed on the side facing away from the loading article (1) and
- a loading article-bearing surface (13) adapted to the geometry of the loading article (1) is formed on the side facing the loading article (1).

5. Device according to one of Claims 1 to 4, characterized in that the lashing strap, in the lashed state, runs exclusively below the upper side (11) of the loading article.

6. Device according to one of Claims 1 to 4, characterized in that the lashing strap, in the lashed state, partially protrudes above the upper side (11) of the loading article.

7. Device according to one of Claims 1 to 4, characterized in that the lashing strap, in the lashed state, runs exclusively above the upper side (11) of the loading article.

8. Device according to one of Claims 3 to 7, characterized in that the deflecting and supporting element (4) consists of plastic, in particular is injection-moulded or cast.

9. Device according to one of Claims 3 to 7, characterized in that the deflecting and supporting element (4) consists of metal and is preferably produced as a casting, in particular a die casting.

10. Device according to one of Claims 3 to 7, characterized in that the deflecting and supporting element (4) is assembled, preferably welded together, from metal sheets and wire profiles (17).

11. Use of a metal or plastic angle, which bears at its vertex edge a concave guiding surface and preferably has a covering surface (15) spanning the two angle legs (14) in such a manner as to connect them on one side, as the deflecting and supporting element (4) of a load-securing device according to Claim 1.

## Revendications

1. Dispositif de blocage pour charges, comportant au moins une ligne d'amarrage réalisée sous forme de sangle d'amarrage (2), susceptible d'être mise sous contrainte et comprenant un guidage au niveau de la matière à charger (1), ledit guidage formant une surface d'appui de sangle (12), la sangle d'amarrage (2) venant en appui contre ladite surface d'appui de sangle (12) dans l'état amarré et bloquant la matière à charger (1) au moyen d'un amarrage de maintien et d'un amarrage en oblique combinés, caractérisé en ce que la surface d'appui de sangle (12) est réalisée concave pour le guidage et le support en coopération de formes de la sangle d'amarrage (2), tout en empêchant un pliage de la sangle.

2. Dispositif selon la revendication 1, caractérisé par un guidage solidaire de la matière à charger (1).

3. Dispositif selon la revendication 1, caractérisé par un élément combiné de renvoi et de support (4) susceptible d'être adapté à la matière à charger (1) et faisant office de guidage.

4. Dispositif selon la revendication 3, caractérisé en ce qu'il est prévu sur l'élément de renvoi et de support (4) :
- la surface d'appui de sangle (12) réalisée sur le côté détourné de la matière à charger (1), et
- une surface d'appui de matière à charger (13) adaptée à la géométrie de la matière à charger (1) et réalisée sur le côté tourné vers la matière à charger (1).

5. Dispositif selon l'une quelconque des revendications 1 à 4, caractérisé en ce que dans l'état amarré la ligne d'amarrage s'étend exclusivement au-dessous de la face supérieure (11) de la matière à charger.

6. Dispositif selon l'une quelconque des revendications 1 à 4, caractérisé en ce que dans l'état amarré la ligne d'amarrage dépasse en partie au-delà de la face supérieure (11) de la matière à charger.

7. Dispositif selon l'une quelconque des revendications 1 à 4, caractérisé en ce que dans l'état amarré la ligne d'amarrage s'étend exclusivement au-dessus de la face supérieure (11) de la matière à charger.

8. Dispositif selon l'une quelconque des revendications 3 à 7, caractérisé en ce que l'élément de renvoi et de support (4) est constitué, en particulier injecté ou moulé, en matière plastique.

9. Dispositif selon l'une quelconque des revendications 3 à 7, caractérisé en ce que l'élément de renvoi et de support (4) est constitué en métal et est réalisé de préférence sous forme de pièce coulée, en particulier sous forme de pièce coulée par injection.

10. Dispositif selon l'une quelconque des revendications 3 à 7, caractérisé en ce que l'élément de renvoi et de support (4) est composé, de préférence soudé, à partir de tôles et de profilés de fil (17).

11. Application d'une équerre en métal ou en matière plastique portant au niveau de son arête sommitale une surface de guidage concave, comportant de préférence une surface de couverture (15) qui coiffe les deux côtés d'équerre (14) en les reliant sur un côté et qui fait office d'élément de renvoi et de support (4) d'un dispositif de blocage pour charges selon la revendication 1.
